# EUROPÄISCHE PATENTSCHRIFT

(11) **EP 2 276 296 B1**
(45) Veröffentlichungstag und Bekanntmachung des Hinweises auf die Patenterteilung: **27.03.2019**
(21) Anmeldenummer: 10182144.5
(22) Anmeldetag: 07.11.2000
(51) Int. Cl.: H04W 52/16, H04W 52/22, H04W 52/24, H04W 52/44, H04W 52/54

(54) **Verfahren zur Regelung der Sendeleistung einer Funkstation**
Transmission power control method of a radio station
Procédé de commande de la puissance de transmission d'une station radio

(30) Priorität: 23.12.1999 DE 19962339
(43) Veröffentlichungstag der Anmeldung: 19.01.2011
(62) Teilanmeldung aus: 08102028.1
(73) Patentinhaber: IPCom GmbH & Co. KG, 82049 Pullach (DE)
(72) Erfinder: Baer, Siegfried, 71579, Pforzheim (DE)
(74) Vertreter: Tomlinson, Edward James

(56) Entgegenhaltungen:
- EP-A- 0 949 830
- WO-A-97/40592
- WO-A-98/36508
- WO-A-98/45962
- JP-A- H11 275 035
- US-A- 5 790 940
- BAKER M P J ET AL: "POWER CONTROL IN UMTS RELEASE '99", INTERNATIONAL CONFERENCE ON 3G MOBILE COMMUNICATION TECHNOLOGIES, XX, XX, Nr. 471, 1999, Seiten 36-40, XP000900538,
- Fredrik Ovesjol ET AL: "FRAMES MULTIPLE ACCESS MODE 2 -WIDEBAND CDMA", Personal, Indoor and Mobile Radio Communications, 1997. Waves of the Year 2000. PIMRC '97., The 8th IEEE International Symposium on, 1 September 1997 (1997-09-01), pages 42-46, XP055333786, DOI: 10.1109/PIMRC.1997.624360 Retrieved from the Internet: URL:http://ieeexplore.ieee.org/ielx3/4928/ 13598/00624360.pdf?tp=&arnumber=624360&isn umber=13598 [retrieved on 2017-01-10]

## Beschreibung

### Stand der Technik

Die Erfindung geht von einem Verfahren zur Regelung der Sendeleistung, von einer Funkstation und von einem Übertragungskanal nach der Gattung der unabhängigen Ansprüche aus.

Aus der Veröffentlichtung "Physical Layer Proceedures (TDD), 3 GPP TSG RAN TS 25.224 V 3.0.0" ist es bereits bekannt, mit einem Zeitschlitz-Duplex-Betrieb für die als Downlink bezeichnete Abwärtsverbindung von der Basisstation zur Mobilstation eine geschlossene Regelschleife vorzusehen. Dabei schätzt die Mobilstation das Signal/Interferenz-Verhältnis SIR (Signal to Inferference Ratio) ihrer Funkverbindung und vergleicht diese Schätzung mit einem vorgegebenen SIR-Wert. Bei Unterschreiten dieses vorgegebenen SIR-Wertes durch die Schätzung wird die Basisstation über einen Rückkanal in der als Uplink bezeichneten Aufwärtsverbindung von der Mobilstation zur Basisstation angewiesen, ihre Sendeleistung zu erhöhen. Bei Überschreiten des vorgegebenen SIR-Wertes durch die Schätzung soll hingegen die Sendeleistung der Basisstation verringert werden.

JP 1999 275035 offenbart eine Methode zur Leistungssteuerung eines Funkkanals von einer Basisstation zu einer Funkstation in Kommunikationssystemen, in denen eine Vielzahl von Benutzern sich Zeitschlitze teilen. Um trotzdem eine zeitnahe Rückmeldung über die Qualität des Datenkanals geben zu können, wird vorgeschlagen, einen "broadcast"-Kanal zur Qualitätsbestimmung durch die Funkstation zu verwenden.

### Vorteile der Erfindung

Das erfindungsgemäße Verfahren zur Regelung der Sendeleistung und die erfindungsgemäßen Funkstationen mit den Merkmalen der unabhängigen Ansprüche haben demgegenüber den Vorteil, dass die Qualität der Funkverbindung in dem Fall, in dem in einem oder in mehreren aufeinanderfolgenden Zeitschlitzen keine Informationen für die zweite Funkstation übertragen werden, aus in mindestens einem anderen Funkkanal übertragenen und von der zweiten Funkstation empfangenen Signalen abgeleitet wird, und bei Eintreffen mehrere Befehle zur Einstellung der Sendeleistung mit vorgegebenen Leistungsänderungen in der ersten Funkstation (1) zwischen zwei Sendezeitpunkten für die Übertragung von Daten an die zweite Funkstation (2) diese vorgegebenen Leistungsänderungen in der ersten Funkstation (1) durch Aufsummieren überlagert werden, so dass zum nachfolgenden Sendezeitpunkt die Sendeleistung der ersten Funkstation (1) eingestellt werden kann. Auf diese Weise kann die Sendeleistung der ersten Funkstation auch in Zeiten ausgesetzter Aktivität des für die Verbindung von der ersten Funkstation zur zweiten Funkstation eingerichteten Funkkanals geregelt werden, um bei erneuter Aktivierung dieses Funkkanals richtig eingestellt zu sein. Dies ist besonders dann von Vorteil, wenn auf diesem Funkkanal eine Paketübertragung realisiert wird, bei der zwischen dem Senden von verschiedenen Paketen unter Umständen größere Zeitintervalle liegen können, die das Regeln der Sendeleistung der ersten Funkstation normalerweise erschweren, zumal beispielsweise gemäß dem UMTS-Standard (Universal Mobile Telecommunications System) keine regelmäßige Übertragung im Uplink und damit für die Leistungsregelung bei einer solchen Paketübertragung vorgesehen ist. Da nun gemäß der Erfindung die Qualität der Funkverbindung auch in Sendepausen ermittelt werden kann, lassen sich Befehle für die Leistungsregelung auch in solchen Sendepausen erzeugen und an die erste Funkstation zur Einstellung der Sendeleistung übertragen.

Das erfindungsgemäße Verfahren ist auch dann von besonderem Vorteil, wenn sich die zweite Funkstation sehr schnell bewegt, so dass sich die Eigenschaften des Funkkanals von der
ersten Funkstation zur zweiten Funkstation sehr schnell ändern, wobei diese Änderung zwischen zwei Sendezeitpunkten so groß sein kann, daß nach dem ersten Sendezeitpunkt und der dann benötigten Zeit zur Bestimmung der Qualität der Funkverbindung in der zweiten Funkstation und der Rückübertragung des Befehls zur Einstellung der Sendeleistung aufgrund der verbleibenden Zeitspanne bis zum nachfolgenden Sendezeitpunkt keine Ähnlichkeit in den Kanaleigenschaften mehr besteht, so daß die Sendeleistung nicht mehr an die Kanaleigenschaften zum nachfolgenden Sendezeitpunkt angepaßt ist. Auch in diesem Fall kann durch Ermittlung der Qualität der Funkverbindung zwischen den beiden Sendezeitpunkten in einem oder in mehreren Zeitschlitzen, in denen keine Informationen für die zweite Funkstation übertragen werden, die Sendeleistung der ersten Funkstation den sich ändernden Kanaleigenschaften nachgeführt werden, so daß sie zum nachfolgenden Sendezeitpunkt an die dann vorliegenden Kanaleigenschaften angepaßt ist.

Die Regelung der Sendeleistung der ersten Funkstation kann also somit erfindungsgemäß auch zwischen zwei Sendezeitpunkten an sich ändernde Kanaleigenschaften angepaßt werden, so daß zu jedem Sendezeitpunkt eine an die dann vorliegenden Kanaleigenschaften angepaßte Sendeleistung realisiert wird. Auf diese Weise wird beispielsweise bei Verwendung eines Code-Vielfachzugriff-Verfahrens das Interferenzniveau beim Empfang von Signalen der ersten Funkstation an der zweiten Funkstation begrenzt, so daß gleichzeitig eine geforderte Bitfehlerrate BER (Bit Error Rate) eingehalten wird. Dadurch ist an der zweiten Funkstation eine vergleichsweise einfache Empfangsvorrichtung, beispielsweise in Form eines Rake-Empfängers, realisierbar, anstatt der Verwendung eines vergleichsweise aufwendigen Joint-Detection-Verfahrens.

Durch die in den Unteransprüchen aufgeführten Maßnahmen sind vorteilhafte Weiterbildungen und Verbesserungen des Verfahrens zur Regelung der Sendeleistung, der Funkstationen und des Übertragungskanals gemäß den unabhängigen Ansprüchen möglich.

Ein Vorteil besteht darin, daß die Qualität der Funkverbindung in der zweiten Funkstation durch Ermittlung der Empfangsleistung von über einen gemeinsamen physikalischen Steuerkanal übertragenen systemspezifischen Informationen und Vergleich mit der für die Übertragung dieser Informationen in der ersten Funkstation vorgegebenen Sendeleistung geschätzt wird. Auf diese Weise kann die Qualität der Funkverbindung auch dann geschätzt werden, wenn auch auf anderen Funkkanälen für die Übertragung von Signalen von der ersten Funkstation an von der zweiten Funkstation verschiedene Funkstationen Sendepause herrscht, genauso wie auf dem Funkkanal von der ersten Funkstation zur zweiten Funkstation. Somit wird die Regelung der Sendeleistung in Sendepausen noch besser gewährleistet.

Ein weiterer Vorteil besteht darin, daß zumindest ein Teil der Befehle zur Einstellung der Sendeleistung über einen wahlfreien Zugriffskanal zur ersten Funkstation übertragen wird. Auf diese Weise kann die Regelung der Sendeleistung unabhängig von einer Signalübertragung im für die Verbindung reservierten Uplink-Funkkanal realisiert werden, so daß eine Datenübertragung in diesem Uplink-Funkkanal nicht für die Regelung der Sendeleistung der ersten Funkstation erforderlich ist.

Besonders vorteilhaft ist es, daß die Qualität der Funkverbindung umso häufiger in der zweiten Funkstation ermittelt wird, je schneller sich die Eigenschaften des zugehörigen Funkkanals ändern. Auf diese Weise wird eine Nachführung der Sendeleistung an die sich ändernden Eigenschaften des zugehörigen Funkkanals mit möglichst geringer Verzögerung gewährleistet, ohne dass für diese Nachführung Signale auf diesem zugehörigen Funkkanal von der ersten Funkstation zur zweiten Funkstation übertragen werden müssen.

Vorteilhaft bei der Verwendung eines Übertragungskanals zur Übertragung von Regelsignalen zwischen den beiden Funkstationen, der nur ein Datenfeld zur Übertragung von Befehlen zur Einstellung der Sendeleistung an einer der beiden Funkstationen umfaßt, ist eine möglichst geringfügige Belastung der Übertragungskapazität bzw. Datenrate durch die Einrichtung eines solchen Übertragungskanals.

### Zeichnung

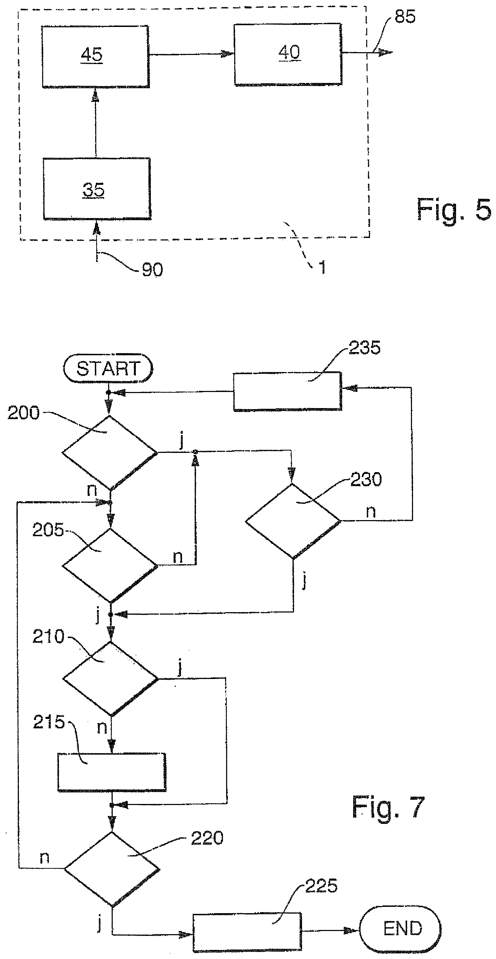

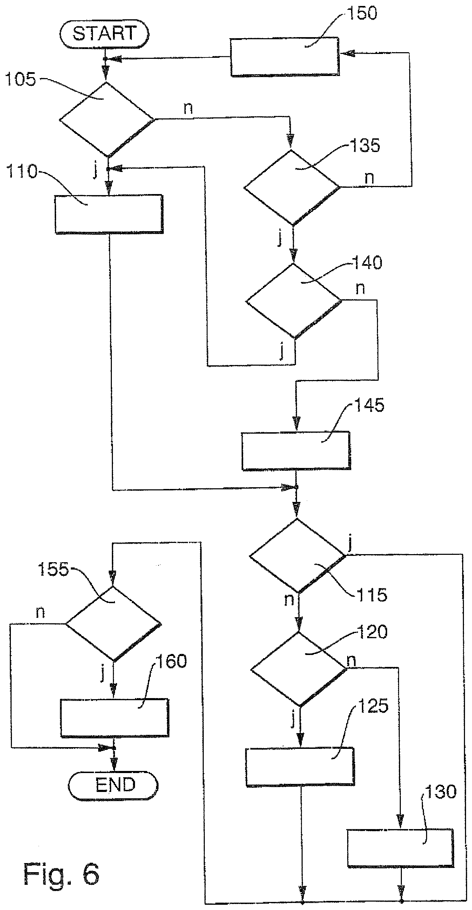

Ein Ausführungsbeispiel der Erfindung ist in der Zeichnung dargestellt und in der nachfolgenden Beschreibung näher erläutert. Es zeigen Figur 1 eine Rahmenstruktur physikalischer Kanäle in einem Übertragungssystem, Figur 2 einen zeitlichen Ablauf einer Datenübertragung in diesem Übertragungssystem, Figur 3 den Aufbau eines Übertragungskanals für die Übertragung von Befehlen zur Einstellung der Sendeleistung, Figur 4 ein Blockschaltbild
einer Regelschleife zur Regelung der Sendeleistung einer Funkstation, Figur 5 ein Blockschaltbild einer Funkstation mit zu regelnder Sendeleistung, Figur 6 einen Ablaufplan für die Funktionsweise zur Bestimmung der Qualität der Funkverbindung und Figur 7 einen Ablaufplan für die Funktionsweise zur Einstellung der Sendeleistung.

### Beschreibung des Ausführungsbeispiels

In einem zellularen Mobilfunksystem mit digitaler Übertragungstechnik, beispielsweise gemäß dem GSM-Standard (Global System for Mobile Communications), dem UMTS-Standard (Universal Mobile Telecommunications System), dem PDC-Standard (Personal Digital Cellular), dem IS-95-Standard (Interim Standard), müssen sich alle Teilnehmer die vorhandene Frequenzressource teilen. Damit sich die einzelnen Teilnehmer dabei möglichst wenig stören, werden unterschiedliche Vielfachzugriffstechniken angewendet.

In einem Mobilfunksystems gemäß dem UMTS-Standard kommt beispielsweise die CDMA-Technik (Code Division Multiple Access) zum Einsatz. Die Trennung der einzelnen Teilnehmer geschieht dabei durch orthogonale Spreizcodes.

Zusätzlich muß eine Aufteilung der unterschiedlichen Übertragungsrichtungen vorgenommen werden. Dafür sind gemäß dem UMTS-Standard zwei unterschiedliche Modi standardisiert. In einem FDD-Modus benutzt die als Downlink bezeichnete Übertragung von einer Basisstation zu einer Mobilstation eine andere Frequenz als die als Uplink bezeichnete Übertragung von der Mobilstation zur Basisstation. Bei einem TDD-Modus (Time Division Duplex) erfolgt die Downlink- und die Uplink-Übertragung auf derselben Trägerfrequenz, allerdings zu unterschiedlichen Zeitpunkten bzw. in unterschiedlichen Zeitschlitzen.

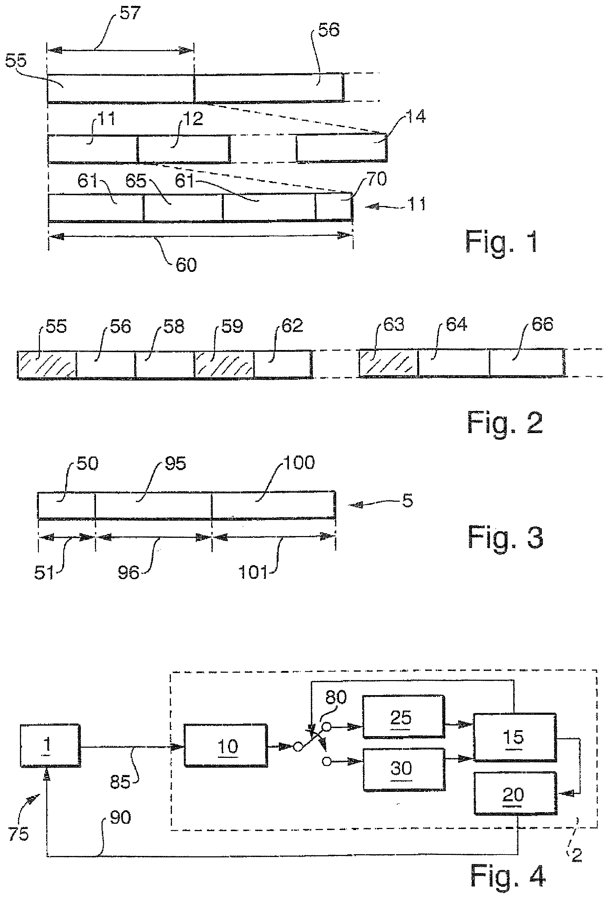

In der Veröffentlichung "Physical Channels and Mapping of Transport Channels onto Physical Channels (TDD)" 3 GPP TSG RAN TS 25.221 V 3.0.0 ist das in Figur 1 gezeigte Format der für die Downlink- und die Uplink-Übertragung verwendeten physikalischen Funkkanäle bei dem im folgenden beispielhaft betrachteten TDD-Modus beschrieben. Derzeit bilden dabei jeweils fünfzehn aufeinanderfolgende, als Zeitschlitze ausgebildete Funkkanäle 11, 12, ..., 14 einen Rahmen 55, 56 mit einer Dauer 57 von beispielsweise 10 ms. Jeder dieser fünfzehn Zeitschlitze 11, 12, ..., 14 ist entweder der Downlink-Übertragung oder der Uplink-Übertragung zugeordnet. Innerhalb der einzelnen Zeitschlitze 11, 12, ..., 14 erfolgt die Teilnehmertrennung durch die bereits erwähnte CDMA-Technik. Die Dauer eines Zeitschlitzes 11, 12, ..., 14 entspricht exakt der Dauer 60 eines Datenbursts, der im allgemeinen aus mehreren Datenblöcken 61, einer Midamble 65 zur Kanalschätzung und einem Schutzintervall 70 zum benachbarten Zeitschlitz hin besteht, sowie evtl. sonstige in Figur 1 nicht eingezeichnete Steuerinformationen umfaßt.

Für eine Verbindung zwischen einer als Basisstation ausgebildeten ersten Funkstation 1 und einer als Mobilstation ausgebildeten zweiten Funkstation 2 gemäß Figur 4 in Downlink- und in Uplink-Übertragungsrichtung wird festgelegt, welcher Code in welchem der Zeitschlitze 11, 12, ..., 14 verwendet wird. Um beispielsweise unterschiedliche Datenraten für die Verbindung zu realisieren, werden der Verbindung entweder mehrere Zeitschlitze und/oder innerhalb eines Zeitschlitzes mehrere Codes zugewiesen. Zusätzlich wird für die Verbindung festgelegt, innerhalb welcher Rahmen 55, 56 übertragen werden soll. Als Beispiel dienen folgende zwei Möglichkeiten: eine Verbindung überträgt in jedem Rahmen 55, 56 in deren ersten Zeitschlitz 11 mit einem bestimmten Code. Gemäß der zweiten Möglichkeit bekommt die Verbindung in einem dritten Zeitschlitz alle verfügbaren Codes und in einem sechsten Zeitschlitz die Hälfte aller verfügbaren Codes zugewiesen, sie überträgt aber nur in jedem zweiten Rahmen. Die zugewiesene Zuordnung zwischen Code, Zeitschlitz und Rahmen für eine einzurichtende Verbindung wird auch als physikalischer Kanal bzw. als Funkkanal bezeichnet.

Durch diese Definition der physikalischen Kanäle ist eine sehr effiziente Nutzung der Funkressource möglich. Für asynchrone Übertragungen, wie beispielsweise gemäß dem IP (Internet Protocol), bei der wesentlich mehr Daten im Downlink als im Uplink übertragen werden, ist daher der TDD-Modus besser geeignet als der FDD-Modus.

CDMA-Systeme sind durch die sogenannte Vielfachzugriffsinterferenz MAI (Multiple Access Interference) interferenzbegrenzt. Das bedeutet, daß jeder Teilnehmer für jeden anderen Teilnehmer innerhalb des gleichen Zeitschlitzes 11, 12, ..., 14 eine zusätzliche Störung darstellt, da bei der Übertragung der ursprünglich mit zueinander orthogonalen Codes gespreizten Signale innerhalb eines Zeitschlitzes 11, 12, ..., 14 über den realen Funkkanal die Orthogonalität teilweise verlorengeht.

Für die Übertragung der Signale von der Basisstation 1 zur Mobilstation 2 ist eine Leistungsregelung gemäß Figur 4 vorgesehen, deren Aufgabe es beispielsweise sein kann, die Sendeleistung der Basisstation 1 für die Übertragung der Signale zur Mobilstation 2 im Downlink innerhalb eines Zeitschlitzes so gering wie möglich zu halten, ohne eine vorgegebene Bitfehlerrate BER (Bit Error Rate) zu überschreiten.

Im TDD-Modus ist für den Downlink eine geschlossene Regelschleife 75 vorgesehen, wie bereits aus der genannten Veröffentlichung "Physical Layer Procedures (TDD)" hervorgeht. Dabei schätzt die Mobilstation 2 das Signal/Interferenz-Verhältnis SIR (Signal to Interference Ratio) auf der Downlinkübertragungsstrecke und vergleicht diese Schätzung mit einem vorgegebenen SIR-Wert, der beispielsweise entsprechend der geforderten BER gewählt ist. Bei Unterschreiten des vorgegebenen SIR-Wertes durch die Schätzung wird die Basisstation 1 über einen der Verbindung zugewiesenen und als Funkkanal ausgebildeten Rückkanal im Uplink angewiesen, die Sendeleistung zu erhöhen. Bei Überschreiten des vorgegebenen SIR-Wertes durch die Schätzung wird die Basisstation 1 über den Rückkanal im Uplink entsprechend angewiesen, die Sendeleistung zu verringern. Diese Anweisungen werden beispielsweise mittels sogenannter TPC-Befehle (Transmit Power Control) über den Rückkanal im Uplink übertragen. Durch die Notwendigkeit der Übertragung solcher TPC-Befehle über den Rückkanal im Uplink existiert immer eine bestimmte Verzögerung zwischen der Schätzung der aktuellen Eigenschaften des Übertragungskanals in Downlinkübertragungsrichtung und der entsprechenden Reaktion bei der Basisstation 1 zur Nachführung und Anpassung der Sendeleistung an diese geschätzten aktuellen Eigenschaften. Falls zum Beispiel Fadingeinbrüche des Übertragungskanals in Downlink-Übertragungsrichtung sehr langsam ablaufen, so kann die Leistungsregelung gut folgen. Bewegt sich jedoch die Mobilstation 2 gegenüber der Basisstation 1 sehr schnell, dann ist wegen der Zeitverzögerung der Regelschleife 75 die Regelung praktisch nutzlos. Zwischen zwei Sendezeitpunkten kann die Änderung der Kanaleigenschaften in Downlink-Übertragungsrichtung so groß sein, daß nach dem ersten der beiden Sendezeitpunkte und der zur Schätzung des SIR-Wertes an der Mobilstation 2 und der für die Rückübertragung des aufgrund dieser Schätzung gebildeten TPC-Befehls erforderlichen Zeit aufgrund der verbleibenden Zeitspanne bis zum nachfolgenden Sendezeitpunkt keine Ähnlichkeit in den Kanaleigenschaften in Downlink-Übertragungsrichtung mehr besteht, so daß die Sendeleistung der Basisstation 1 zum nachfolgenden Sendezeitpunkt nicht mehr an die zu diesem Zeitpunkt vorliegenden Kanaleigenschaften in Downlink-Übertragungsrichtung angepaßt ist.

Diese Problematik wird zusätzlich dadurch verschärft, daß es gemäß der zuvor geschilderten Definition des oder der der Verbindung zugewiesenen physikalischen Kanäle oder Funkkanäle in Uplink-Übertragungsrichtung möglich ist, daß z.B. nur in jedem zweiten Rahmen eine Übertragung stattfindet. Gemäß der Veröffentlichung "Analyse und Entwurf digitaler Mobilfunksysteme", P. Jung, B. G. Teubner, Stuttgart, 1997 liegt die sogenannte Kohärenzzeit eines Funkkanals bei einer Trägerfrequenz von 2 GHz und einer Geschwindigkeit der Mobilstation 2 von 13, 5 km/h bei ca. 20 ms. Die Kohärenzzeit definiert dabei diejenige Zeit, in der sich die Kanaleigenschaften in der Regel vollständig ändern. Wenn nun in jedem zweiten Rahmen, d.h. alle 20 ms ein TPC-Befehl in Uplink-Übertragungsrichtung übertragen wird, so haben sich in dem beschriebenen Beispiel die aktuellen Kanaleigenschaften in der Regel vollständig gegenüber jenen geändert, bei denen letztmalig eine Schätzung des SIR-Wertes erfolgte. Damit ist es für die Leistungsregelung unmöglich geworden, die für einen Funkkanal typischen schnellen und tiefen Fadingeinbrüche durch Anpassung der Sendeleistung der Basisstation 1 zu kompensieren.

Insbesondere bei einer Paket-Übertragung, bei der zwischen dem Senden von verschiedenen Paketen unter Umständen größere Zeitintervalle liegen können, ist das Regeln der Sendeleistung der Basisstation 1 problematisch, da beispielsweise gemäß dem UMTS-Standard keine regelmäßige Übertragung in Uplink-Übertragungsrichtung und damit auch keine regelmäßige Übertragung von TPC-Befehlen für die Leistungsregelung bei der Paketübertragung vorgesehen ist.

In Figur 4 ist ein Blockschaltbild für die Leistungsregelung gemäß der Erfindung dargestellt. Dabei umfaßt die Mobilstation 2 eine erste Empfangsvorrichtung 10, die über einen steuerbaren Schalter 80 entweder mit einer Vorrichtung 25 zur Ermittlung des SIR-Verhältnisses oder mit einer Vorrichtung 30 zur Ermittlung eines Dämpfungswertes verbindbar ist. Sowohl die Vorrichtung 25 zur Ermitlung des SIR-Verhältnisses als auch die Vorrichtung 30 zur Ermittlung des Dämpfungswertes ist an eine Auswertevorrichtung 15 der Mobilstation 2 angeschlossen, die wiederum mit einer ersten Sendevorrichtung 20 der Mobilstation 2 verbunden ist. Die Regelschleife 75 wird dadurch gebildet, daß die Basisstation 1 einerseits über eine erste Luftschnittstelle 85 mit der ersten Empfangsvorrichtung 10 und andererseits über eine zweite Luftschnittstelle 90 mit der ersten Sendevorrichtung 20 verbunden ist. Auf diese Weise wird die geschlossene Regelschleife 75 realisiert.

In Figur 5 ist der Aufbau der Basisstation 1 für die Funktion der Regelschleife 75 in Form eines Blockschaltbildes detaillierter dargestellt. Danach ist die erste Sendevorrichtung 20 über die zweite Luftschnittstelle 90 mit einer zweiten Empfangsvorrichtung 35 der Basisstation 1 verbunden. Die Basisstation 1 umfaßt eine Auswerteeinheit 45, an die die zweite Empfangsvorrichtung 35 und eine zweite Sendevorrichtung 40 angeschlossen ist. Die zweite Sendevorrichtung 40 ist über die erste Luftschnittstelle 85 mit der ersten Empfangsvorrichtung 10 der Mobilstation 2 verbunden.

Im folgenden soll beispielhaft folgendes Szenario betrachtet werden: in einer von der Basisstation 1 aufgespannten Funkzelle befinden sich mehrere Mobilstationen, darunter die in Figur 4 dargestellte Mobilstation 2. Zwischen der Basisstation 1 und der in Figur 4 dargestellten Mobilstation 2 sollen in regelmäßigen Abständen im Downlink Daten übertragen werden, wobei die Leistungsregelung über die geschlossene Regelschleife 75 wie beschrieben erfolgen soll, wobei der steuerbare Schalter 80, der von der Auswertevorrichtung 15 angesteuert wird, so eingestellt sein soll, daß er die erste Empfangsvorrichtung 10 mit der Vorrichtung 25 zur Ermittlung des SIR-Verhältnisses verbindet. Gemäß Figur 2 ist der zeitliche Ablauf dieser Datenübertragung dargestellt. Dabei kennzeichnet 55 einen ersten Rahmen, 56 einen darauffolgenden zweiten Rahmen, 58 einen darauffolgenden dritten Rahmen, 59 einen darauffolgenden vierten Rahmen, 62 einen darauffolgenden fünften Rahmen, 63 einen nach mehreren weiteren Rahmen folgenden sechsten Rahmen, 64 einen nachfolgenden siebten Rahmen und 66 einen nachfolgenden achten Rahmen, dem weitere Rahmen folgen können, wie in Figur 2 angedeutet ist.

Es soll nun angenommen werden, daß im ersten Rahmen 55 Daten von der Basisstation 1 zur Mobilstation 2 in Downlink-Übertragungsrichtung im ersten Zeitschlitz 11, im zweiten Zeitschlitz 12 und in einem dritten Zeitschlitz übertragen werden. Im zweiten Rahmen 56 und im dritten Rahmen 58 erfolgt dann keine Übertragung in Downlink-Übertragungsrichtung. Die nächste Übertragung in Downlink-Übertragungsrichtung erfolgt im vierten Rahmen 59. In jedem dritten Rahmen 55, 59, 63, die in Figur 3 grau unterlegt sind, werden also Daten von der Basisstation 1 zur Mobilstation 2 in Downlink-Übertragungsrichtung jeweils im ersten Zeitschlitz 11, im zweiten Zeitschlitz 12 und im dritten Zeitschlitz übertragen. In der Vorrichtung 25 zur Ermittlung des SIR-Verhältnisses wird aus den in den für die Downlink-Übertragung vorgesehenen Zeitschlitzen in der ersten Empfangsvorrichtung 10 empfangenen Datensignalen jeweils ein SIR-Wert ermittelt bzw. geschätzt. Der jeweils ermittelte SIR-Wert wird dann in der Auswertevorrichtung 15 mit dem für die Downlink-Übertragung vorgegebenen SIR-Wert verglichen. Anhand des Vergleichsergebnisses wird dann in der beschriebenen Weise in der Auswertevorrichtung 15 eine Entscheidung getroffen, ob und wie die Sendeleistung der Basisstation 1 verändert werden muß. Bewegt sich der ermittelte SIR-Wert dabei in einem vorgegebenen Bereich um den vorgegebenen SIR-Wert herum, so ist keine Änderung der Sendeleistung der Basisstation 1 erforderlich und es wird kein TPC-Befehl in Uplink-Übertragungsrichtung an die Basisstation 1 über die zweite Luftschnittstelle 90 gesendet, so daß auch keine Uplink-Funkressourcen benötigt werden. Falls jedoch der ermittelte SIR-Wert außerhalb des vorgegebenen Bereichs liegt, so ist eine Änderung der Sendeleistung notwendig und der entsprechende TPC-Befehl wird über die Uplink-Übertragungsrichtung zur Basisstation 1 versendet. Dazu kann der für die Uplink-Übertragungsrichtung zwischen der Mobilstation 2 und der Basisstation 1 vorgesehene Funkkanal verwendet werden, wobei entsprechende Zeitschlitze in entsprechenden Rahmen gemäß Figur 2 auch für die Uplink-Übertragungsrichtung in der beschriebenen Weise reserviert werden können.

Zusätzlich oder alternativ kann es vorgesehen sein, die TPC-Befehle über einen eigens eingerichteten Übertragungskanal von der Mobilstation 2 zur Basisstation 1 zu senden. Dieser Übertragungskanal kann beispielsweise als wahlfreier Zugriffskanal ausgebildet und als RACHP (Random Access Channel for Power Control) ausgebildet sein. Ein solcher RACHP ist in Figur 3 dargestellt und durch das Bezugszeichen 5 gekennzeichnet. Es handelt sich dabei um einen vergleichsweise kurzen Burst, der aus einer kleinen Midamble 95 einer Dauer 96 von beispielsweise 256 Chips, einem TPC-Befehl in einem Datenfeld 50, einer Dauer 51 von beispielsweise 16 Chips und einem verlängerten Schutzintervall 100 einer Dauer 101 von beispielsweise 240 Chips besteht. Somit hat der RACHP 5 in diesem Beispiel eine Gesamtdauer oder Länge von 512 Chips, so daß innerhalb eines Zeitschlitzes einer Dauer von beispielsweise 2560 Chips fünf verschiedene RACHP 5 zur Verfügung stehen. Vorausgesetzt dabei ist, daß für den jeweiligen RACHP 5 nur ein einziger Spreizcode einer Länge von 16 Chips reserviert ist, um den TPC-Befehl im Datenfeld 50 übertragen zu können. Dabei ist jedoch der für die Leistungsregelung in Kauf zu nehmende Verlust an Funkressourcen in Uplink-Übertragungsrichtung durch Einrichtung eines oder mehrerer RACHP's 5 minimal.

In allen anderen Zeitschlitzen, die nicht für die Übertragung in Downlink-Übertragungsrichtung vorgesehen sind, kann kein SIR-Wert für die Downlink-Übertragungsrichtung zwischen der Basisstation 1 und der Mobilstation 2 bestimmt werden, da kein Nutzsignal für die Mobilstation 2 vorhanden ist. In diesen Fällen veranlaßt die Auswertevorrichtung 15 den steuerbaren Schalter 80 dazu, die erste Empfangsvorrichtung 10 mit der Vorrichtung 30 zur Ermittlung des Dämpfungswertes zu verbinden. Es erfolgt dann während dieser für die Mobilstation 2 nicht nutzbaren Zeitschlitze eine Auswertung des aus der genannten Veröffentlichung "Physical Channels and Mapping of Transport Channels onto Physical Channels (TDD)" bekannten Physical Common Control Channels, der einen gemeinsamen physikalischen Steuerkanal darstellt und in regelmäßigen Abschnitten, z.B. während des ersten und des achten Zeitschlitzes in jedem Rahmen systemspezifische Informationen mit einer bekannten weil vorgegebenen Sendeleistung von der Basisstation 1 an alle in der von der Basisstation 1 aufgespannten Funkzelle befindlichen Mobilstationen überträgt. Die Vorrichtung 30 zur Ermittlung des Dämpfungswertes ermittelt nun anhand der von der ersten Empfangsvorrichtung 10 empfangenen systemspezifischen Informationen des Physical Common Control Channels die Empfangsleistung und vergleicht sie mit der vorgegebenen Sendeleistung. Aus diesem Vergleich schätzt die Vorrichtung 30 zur Ermittlung des Dämpfungswertes die Dämpfung des Funkkanals von der Basisstation 1 zur Mobilstation 2. Stellt nun die Auswertevorrichtung 15 fest, daß die so ermittelte Dämpfung innerhalb eines vorgegebenen Bereichs um eine vorgegebene Dämpfung herum liegt, so erfolgt keine Meldung an die Basisstation 1, ihre Sendeleistung zu ändern. Stellt die Auswertevorrichtung 15 jedoch fest, daß die ermittelte Dämpfung außerhalb des vorgegebenen Bereichs liegt, so erfolgt beispielsweise über den RACHP 5 eine Meldung an die Basisstation 1, die Sendeleistung für die Downlink-Übertragungsstrecke entsprechend anzupassen. Diese Meldung kann wie beschrieben durch Verwendung eines TPC-Befehls erfolgen. Aktuell werden jedoch von der Basisstation 1 an die Mobilstation 2 keine Daten in Downlink-Übertragungsrichtung übertragen, so daß die mittels der TPC-Befehle vorgegebenen Leistungsänderungen für die Sendeleistung der Basisstation 1 in einem in Figur 5 nicht dargestellten Speicher der Basisstation 1 abgelegt werden. Treffen zwischen zwei Sendezeitpunkten für die Übertragung von Daten in Downlink-Übertragungsrichtung mehrere TPC-Befehle mit vorgegebenen Leistungsänderungen in der Basisstation 1 ein, so werden diese vorgegebenen Leistungsänderungen in der Basisstation 1 durch einfaches Aufsummieren überlagert, so daß zum nachfolgenden Sendezeitpunkt für die Übertragung von Daten in der Downlink-Übertragungsrichtung im Idealfall genau die Sendeleistung an der Basisstation 1 eingestellt werden kann, mit der das geforderte SIR-Verhältnis an der Mobilstation 2 eingehalten wird.

Zusätzlich oder alternativ kann es auch vorgesehen sein, daß die Vorrichtung 25 zur Ermittlung des SIR-Verhältnisses auch von der ersten Empfangsvorrichtung 10 empfangene Signale zur Ermittlung des SIR-Wertes heranzieht, die nicht für die Mobilstation 2 vorgesehen sind, jedoch von der Basisstation 1 an andere in der Funkzelle liegende Mobilstationen gesendet werden. Diese Übertragung erfolgt dabei in Zeitschlitzen, die nicht für die Downlink-Übertragung von der Basisstation 1 zur Mobilstation 2 vorgesehen sind, jedoch von der Mobilstation 2 in entsprechender Weise ausgewertet werden können, wie dies oben für die Ermittlung und Auswertung des SIR-Verhältnisses in Zeitschlitzen beschrieben wurde, die für die Downlink-Übertragung von der Basisstation 1 zur Mobilstation 2 vorgesehen sind.

Die Ermittlung des SIR-Verhältnisses oder des Dämpfungswertes stellt nichts anderes dar als die Ermittlung der Qualität der Funkverbindung für die Downlink-Übertragung von der Basisstation 1 zur Mobilstation 2.

In einem weiteren Beispiel soll eine Verbindung zwischen der Basisstation 1 und der Mobilstation 2 derart bestehen, daß in jedem Rahmen eine Übertragung sowohl in Downlink-Übertragungsrichtung, beispielsweise im ersten Zeitschlitz als auch in Uplink-Übertragungsrichtung, beispielsweise im zweiten Zeitschlitz stattfindet. Die Leistungsregelung soll dabei entsprechend der genannten Veröffentlichung "Physical Layer Procedures (TDD)" erfolgen, bei der in jeder Uplink-Übertragung die TPC-Befehle für die Leistungsregelung in Downlink-Übertragungsrichtung als zusätzliche Steuerinformation mitübertragen werden. Hier soll nun jedoch der Fall vorliegen, daß in Folge schnellerer Bewegungen der Mobilstation 2 sich der Funkkanal in Downlink-Übertragungsrichtung entsprechend schneller ändert und demzufolge die Leistungsregelung mit einer Verzögerung eines Rahmens, also beispielsweise einer Verzögerung von 10 ms, diese Änderungen nicht ausgleichen kann. Hier bietet sich die Möglichkeit, durch Überwachen der Kanaldämpfung im Physical Common Control Channel in der beschriebenen Art über den RACHP 5 zusätzliche TPC-Befehle an die Basisstation 1 zu übertragen und auf diese Weise die Schnelligkeit der Leistungsregelung den zeitlichen Änderungen des Funkkanals in Downlink-Übertragungsrichtung anzupassen. Es kann jedoch zusätzlich oder alternativ auch vorgesehen sein, das SIR-Verhältnis in der ebenfalls beschriebenen Art in Zeitschlitzen zu überwachen, die nicht für die Downlink-Übertragung von der Basisstation 1 zur Mobilstation 2, sondern von der Basisstation 1 zu anderen in der Funkzelle der Basisstation 1 liegenden Mobilstationen vorgesehen sind und die entsprechenden TPC-Befehle über den RACHP 5 wie beschrieben an die Basisstation 1 zu übertragen und die Schnelligkeit der Leistungsregelung den zeitlichen Änderungen des Funkkanals von der Basisstation 1 zur Mobilstation 2 in Downlink-Übertragungsrichtung anzupassen.

In Figur 6 ist ein Ablaufplan für die Ermittlung der Qualität der Funkverbindung in der Mobilstation 2 dargestellt. Bei einem Programmpunkt 105 prüft die Auswertevorrichtung 15, ob der empfangene Zeitschlitz für die Übertragung in Downlink-Übertragungsrichtung von der Basisstation 1 zur Mobilstation 2 vorgesehen ist. Ist dies der Fall, so wird zu einem Programmpunkt 110 verzweigt, anderenfalls wird zu einem Programmpunkt 135 verzweigt. Bei Programmpunkt 110 ermittelt die Vorrichtung 25 zur Ermittlung des SIR-Verhältnisses aus dem in diesem Zeitschlitz empfangenen Signal einen SIR-Wert und leitet daraus einen Wert für die Qualität der Funkverbindung zwischen der Basisstation 1 und der Mobilstation 2 in Downlink-Übertragungrichtung ab. Anschließend wird zu einem Programmpunkt 115 verzweigt.

Bei Programmpunkt 135 prüft die Auswertevorrichtung 15, ob die Durchführung einer zusätzlichen Ermittlung der Qualität der Funkverbindung erforderlich ist und ob ein für die Downlink-Übertragung nicht vorgesehener Zeitschlitz mit Signalen oder ein Zeitschlitz mit Signalen des Physical Common Control Channel empfangen wird. Ist dies der Fall, so wird zu einem Programmpunkt 140 verzweigt, andernfalls wird zu einem Programmpunkt 150 verzweigt. Bei Programmpunkt 150 wird eine Warteschleife der Dauer eines Zeitschlitzes durchlaufen. Anschließend wird zu Programmpunkt 105 zurückverzweigt. Bei Programmpunkt 140 prüft die Auswertevorrichtung 15, ob Signale in einem fremden Zeitschlitz empfangen wurden, der für die Übertragung von der Basisstation 1 zu einer anderen in der Funkzelle liegenden Mobilstation reserviert ist. Ist dies der Fall, so wird zu Programmpunkt 110 verzweigt und der Schalter 80 veranlaßt, die erste Empfangsvorrichtung 10 mit der Vorrichtung 25 zur Ermittlung des SIR-Verhältnisses zu verbinden, andernfalls wird zu einem Programmpunkt 145 verzweigt, bei dem der Schalter 80 veranlaßt wird, die erste Empfangsvorrichtung 10 mit der Vorrichtung 30 zur Ermittlung des Dämpfungswertes zu verbinden. Es findet dann bei Programmpunkt 145 in der Vorrichtung 30 zur Ermittlung des Dämpfungswertes eine Ermittlung der Dämpfung im empfangenen Zeitschlitz des Physical Common Control Channel statt, die ebenfalls in einen Wert für die Qualität der Verbindung umgerechnet wird. Anschließend wird zu Programmpunkt 115 verzweigt. Bei Programmpunkt 110 wird in jedem Fall der Schalter 80 veranlaßt, die erste Empfangsvorrichtung 10 mit der Vorrichtung 25 zur Ermittlung des SIR-Verhältnisses zu verbinden.

Bei Programmpunkt 115 prüft die Auswertevorrichtung 15, ob die ermittelte Qualität der Funkverbindung in einem vorgegebenen Bereich um einen vorgegebenen Wert für die Qualität der Funkverbindung liegt. Ist dies der Fall, so wird zu einem Programmpunkt 155 verzweigt, andernfalls wird zu einem Programmpunkt 120 verzweigt. Bei Programmpunkt 120 prüft die Auswertevorrichtung 15, ob der ermittelte Wert für die Qualität der Funkverbindung den vorgegebenen Bereich überschreitet. Ist dies der Fall, so wird zu einem Programmpunkt 125 verzweigt, andernfalls wird zu einem Programmpunkt 130 verzweigt. Bei Programmpunkt 125 veranlaßt die Auswertevorrichtung 15 die Erzeugung eines TPC-Befehls zum Senken der Sendeleistung der Basisstation 1 und gibt in diesem TPC-Befehl an, um wieviel die Sendeleistung gesenkt werden muß, damit der Wert für die Qualität der Funkverbindung im vorgegebenen Bereich liegt. Anschließend wird zu Programmpunkt 155 verzweigt. Bei Programmpunkt 130 veranlaßt die Auswertevorrichtung 15 die Erzeugung eines TPC-Befehls zum Erhöhen der Sendeleistung der Basisstation 1 und gibt in diesem Befehl an, um wieviel die Sendeleistung erhöht werden muß, damit die Qualität der Funkverbindung im vorgegebenen Bereich liegt. Anschließend wird zu Programmpunkt 155 verzweigt. Sowohl bei Programmpunkt 125 als auch bei Programmpunkt 130 veranlaßt die Auswertevorrichtung 15 die erste Sendevorrichtung 20 zur Versendung des entsprechend gebildeten TPC-Befehls über den RACHP 5 an die Basisstation 1, wobei der RACHP 5 zu Beginn der aufgebauten Verbindung zwischen der Basisstation 1 und der Mobilstation 2 bzw. für das erstmalige Senden eines TPC-Befehls von der Mobilstation 2 zur Basisstation 1 während einer aufgebauten Verbindung von der Auswertevorrichtung 15 über die erste Sendevorrichtung 20 eingerichtet oder von der Basisstation 1 vorreserviert werden kann.

Bei Programmpunkt 155 prüft die Auswertevorrichtung 15, ob die Geschwindigkeit der Änderung der Eigenschaften des Funkkanals von der Basisstation 1 zur Mobilstation 2 außerhalb eines vorgegebenen Bereichs liegt. Ist dies der Fall, so wird zu einem Programmpunkt 160 verzweigt, andernfalls wird das Programm verlassen. Bei Programmpunkt 160 veranlaßt die Auswertevorrichtung 15 eine Anpassung der zeitlichen Abstände für das Prüfen der Qualität der Funkverbindung in der Mobilstation 2. Überschreitet die Geschwindigkeit der Änderungen den vorgegebenen Bereich, so werden die genannten zeitlichen Abstände verkürzt. Unterschreitet die Geschwindigkeit der Änderungen den vorgegebenen Bereich, so werden die genannten zeitlichen Abstände verlängert. Somit kann die Leistungsregelung für die Einstellung der Sendeleistung an der Basisstation 1 auch bei schneller Bewegung der Mobilstation 2 und damit bei schnellen Änderungen der Eigenschaften des Funkkanals für die Downlink-Übertragungsstrecke nachgeführt werden. Bei langsamer Bewegung der Mobilstation 2 kann hingegen Übertragungskapazität in der Uplink-Übertragungsrichtung eingespart werden, indem weniger TPC-Befehle über den RACHP 5 in Uplink-Übertragungsrichtung übertragen werden. Es kann auch vorgesehen sein, den RACHP 5 nur dann zu erzeugen, wenn TPC-Befehle in Uplink-Übertragungsrichtung zu übertragen sind. Auf diese Weise wird die für die Uplink-Übertragungsrichtung zur Verfügung stehende Datenrate oder Übertragungskapazität durch die Übertragung der TPC-Befehle nur geringstmöglich belastet. Nach Programmpunkt 160 wird das Programm verlassen.

In Figur 7 ist ein Ablaufplan für die Funktionsweise der Basisstation 1 bei der beschriebenen Leistungsregelung dargestellt. Bei einem Programmpunkt 200 prüft die Auswerteeinheit 45, ob im aktuellen Zeitschlitz Signale von der Basisstation 1 zur Mobilstation 2 übertragen werden. Ist dies der Fall, so wird zu einem Programmpunkt 230 verzweigt, andernfalls wird zu einem Programmpunkt 205 verzweigt. Bei Programmpunkt 230 prüft die Auswerteeinheit 45, ob im Anschluß an die Übertragung der Signale in dem genannten Zeitschlitz zur Mobilstation 2 ein TPC-Befehl in einem für die Verbindung von der Mobilstation 2 zur Basisstation 1 reservierten Funkkanal in Uplink-Übertragungsrichtung übertragen wurde. Ist dies der Fall, so wird zu einem Programmpunkt 210 verzweigt, andernfalls wird zu einem Programmpunkt 235 verzweigt. Bei Programmpunkt 235 durchläuft die Auswerteeinheit 45 eine Warteschleife der Dauer etwa eines Zeitschlitzes. Anschließend wird zu Programmunkt 200 zurückverzweigt. Bei Programmpunkt 205 prüft die Auswerteeinheit 45, ob im Anschluß an den bei Programmpunkt 200 genannten Zeitschlitz ein TPC-Befehl über den RACHP 5 empfangen wurde. Ist dies der Fall, so wird zu Programmpunkt 210 verzweigt, andernfalls wird zu Programmpunkt 230 verzweigt und die Prüfung auf den TPC-Befehl wie beschrieben im regulären bzw. für die Verbindung von der Mobilstation 2 zur Basisstation 1 reservierten Funkkanal in Uplink-Übertragungsrichtung durchgeführt. Bei Programmpunkt 210 prüft die Auswerteeinheit 45, ob der empfangene TPC-Befehl der erste nach der letztmaligen Übertragung von Signalen in der Downlink-Übertragungsrichtung an die Mobilstation 2 ist. Ist dies der Fall, so wird zu einem Programmpunkt 220 verzweigt, andernfalls wird zu einem Programmpunkt 215 verzweigt. Bei Programmpunkt 215 wird der im empfangenen TPC-Befehl enthaltene Änderungswert für die durchzuführende Änderung der Sendeleistung in der Basisstation 1 mit den zuvor mittels TPC-Befehlen empfangenen durchzuführenden Änderungswerten überlagert bzw. summiert, die nach dem letztmaligen Übertragen von Signalen in der Downlink-Übertragungsrichtung empfangen wurden. Der sich ergebene Summenwert wird für eine gegebenenfalls später erforderliche weitere Summierung oder für die Einstellung der Sendeleistung für eine nachfolgende Übertragung in Downlink-Übertragungsrichtung in einem in den Figuren nicht dargestellten Zwischenspeicher der Basisstation 1 zwischengespeichert. Anschließend wird ebenfalls zu Programmpunkt 220 verzweigt. In dem Fall, in dem der TPC-Befehl der erste nach der letztmaligen Übertragung von Signalen in der Downlink-Übertragungsrichtung ist, erfolgt in gleicher Weise zu späteren Summationszwecken oder zu einer Einstellung der Sendeleistung der Basisstation 1 für eine nachfolgend vorgesehene Übertragung in der Downlink-Übertragungsrichtung eine Zwischenspeicherung des in diesem TPC-Befehl enthaltenen Änderungswert für die Einstellung der Sendeleistung im genannten Zwischenspeicher. Bei Programmpunkt 220 prüft die Auswerteeinheit 45, ob im nachfolgenden Zeitschlitz eine Übertragung in der Downlink-Übertragungsrichtung zur Mobilstation 2 vorgesehen ist. Ist dies der Fall, so wird zu einem Programmpunkt 225 verzweigt, andernfalls wird zu Programmpunkt 205 zurückverzweigt. Bei Programmpunkt 225 veranlaßt die Auswerteeinheit 45 die Einstellung der Sendeleistung der Basisstation 1 für die durchzuführende Übertragung in Downlink-Übertragungsrichtung gemäß dem zuletzt im Zwischenspeicher abgespeicherten ggf. aufsummierten Änderungswert. Anschließend wird das Programm verlassen.

Erfindungsgemäß wird somit ermöglicht, daß die Basisstation 1 immer die optimale Sendeleistung für jede Verbindung in Downlink-Übertragungsrichtung kennt, auch wenn beim Verbindungsaufbau nicht mindestens einmal in jedem Rahmen eine Uplink-Übertragung vereinbart wurde. Somit bleiben die Einflüsse der MAI begrenzt und die geforderte Bitfehlerrate BER kann eingehalten werden. Dadurch kann die erste Empfangsvorrichtung 10 an der Mobilstation 2 einfacher, beispielsweise durch Verwendung eines Rake-Empfängers realisiert werden, anstatt der Verwendung eines aufwendigeren Joint-Detection-Verfahrens.

Die Einstellung der Sendeleistung erfolgt dabei an der zweiten Sendevorrichtung 40.

Die von der Mobilstation 2 zur Basisstation 1 übertragenen TPC-Befehle stellen Regelsignale dar, die in der Regelschleife 75 in der Uplink-Übertragungsrichtung übertragen werden. Es kann dabei vorgesehen sein, daß der RACHP 5 neben seiner Midamble 95 und seinem Schutzintervall 100 lediglich das eine Datenfeld 50 zur Übertragung der TPC-Befehle umfaßt.

## Patentansprüche

1. Verfahren zur Regelung der Sendeleistung einer ersten Funkstation (1) in einem Mobilfunksystem mit Zeitschlitzverfahren, wobei zwischen der ersten Funkstation (1) und mindestens einer zweiten Funkstation (2) eine Funkverbindung besteht, bei der Funksignale in Funkkanälen (11, 12, 14) in Form von Zeitschlitzen ausgetauscht werden und wobei in der zweiten Funkstation (2) eine Qualität der Funkverbindung aus den empfangenen Signalen ermittelt wird und in Abhängigkeit der ermittelten Qualität Befehle zur Einstellung der Sendeleistung von der zweiten Funkstation (2) an die erste Funkstation (1) gesendet werden, **dadurch gekennzeichnet, dass** die Qualität der Funkverbindung in dem Fall, in dem in einem oder in mehreren aufeinanderfolgenden Zeitschlitzen keine Informationen für die zweite Funkstation (2) übertragen werden, aus in mindestens einem nicht der Funkverbindung zugeordneten anderen Funkkanal übertragenen und von der zweiten Funkstation (2) empfangenen Signalen abgeleitet wird, **und dass** bei Eintreffen mehrere Befehle zur Einstellung der Sendeleistung mit vorgegebenen Leistungsänderungen in der ersten Funkstation (1) zwischen zwei Sendezeitpunkten für die Übertragung von Daten an die zweite Funkstation (2) diese vorgegebenen Leistungsänderungen in der ersten Funkstation (1) durch Aufsummieren überlagert werden, so dass zum nachfolgenden Sendezeitpunkt die Sendeleistung der ersten Funkstation (1) eingestellt werden kann.

2. Verfahren nach Anspruch 1, **dadurch gekennzeichnet, dass** für den Fall, in dem die Qualität der Funkverbindung in Zeitschlitzen (11, 12, 14) ermittelt wird, die für die Übertragung von Informationen für die zweite Funkstation (2) oder für mindestens eine weitere Funkstation vorgegeben sind, die Qualität der Funkverbindung anhand eines Signal/Interferenzverhältnisses der in den entsprechenden Zeitschlitzen (11, 12, 14) empfangenen Signalen in der zweiten Funkstation (2) bestimmt wird.

3. Verfahren nach Anspruch 1 oder 2, **dadurch gekennzeichnet, dass** die Qualität der Funkverbindung in der zweiten Funkstation (2) durch Ermittlung der Empfangsleistung von über einen gemeinsamen physikalischen Steuerkanal übertragenen systemspezifischen Informationen und Vergleich mit der für die Übertragung dieser Informationen in der ersten Funkstation (1) vorgegebenen Sendeleistung geschätzt wird.

4. Verfahren nach Anspruch 1, 2 oder 3, **dadurch gekennzeichnet, dass** zumindest ein Teil der Befehle zur Einstellung der Sendeleistung über einen wahlfreien Zugriffskanal (5) zur ersten Funkstation (1) übertragen wird.

5. Verfahren nach einem der vorherigen Ansprüche, **dadurch gekennzeichnet, dass** für den Fall, in dem in der zweiten Funkstation (2) festgestellt wird, dass die ermittelte Qualität der Funkverbindung einen vorgegebenen Wert überschreitet, ein Befehl zur Reduzierung der Sendeleistung erzeugt und an die erste Funkstation (1) gesendet wird.

6. Verfahren nach einem der vorherigen Ansprüche, **dadurch gekennzeichnet, dass** für den Fall, in dem in der zweiten Funkstation (2) festgestellt wird, dass die ermittelte Qualität der Funkverbindung einen vorgegebenen Wert unterschreitet, ein Befehl zur Erhöhung der Sendeleistung erzeugt und an die erste Funkstation (1) gesendet wird.

7. Verfahren nach einem der vorherigen Ansprüche, **dadurch gekennzeichnet, dass** von der zweiten Funkstation (2) nur ein Befehl zur Einstellung der Sendeleistung erzeugt wird, wenn die ermittelte Qualität der Funkverbindung außerhalb eines vorgegebenen Bereichs liegt.

8. Verfahren nach einem der vorherigen Ansprüche, **dadurch gekennzeichnet, dass** die Befehle zur Einstellung der Sendeleistung im Rahmen der Funkverbindung zwischen der ersten Funkstation (1) und der zweiten Funkstation (2) übertragen werden.

9. Verfahren nach einem der vorherigen Ansprüche, **dadurch gekennzeichnet, dass** Signale verschiedener Funkverbindungen des Mobilfunksystems mittels eines Codevielfachzugriffsverfahrens, insbesondere unter Verwendung zueinander orthogonaler Codes übertragen werden.

10. Verfahren nach einem der vorherigen Ansprüche, **dadurch gekennzeichnet, dass** die Qualität der Funkverbindung umso häufiger in der zweiten Funkstation (2) ermittelt wird, je schneller sich die Eigenschaften des zugehörigen Funkkanals ändern.

11. Mobilfunksystem mit einer ersten Funkstation (1) und mindestens einer zweiten Funkstation (2),
**wobei** die mindestens eine zweite Funkstation (2) umfasst:
- eine Empfangsvorrichtung (10) zum Empfang von Signalen einer Funkverbindung von der ersten Funkstation (1) über mindestens einen ersten Funkkanal (85) in Form eines Zeitschlitzes,
- Mittel (25, 30) zur Bestimmung der Qualität der Funkverbindung aus den empfangenen Signalen,
- eine Auswertevorrichtung (15) zur Erzeugung von Befehlen für die Einstellung der Sendeleistung der ersten Funkstation (1) in Abhängigkeit der ermittelten Qualität der Funkverbindung und
- eine Sendevorrichtung (20) zur Versendung der Befehle an die erste Funkstation (1), **und wobei** die erste Funkstation (1) umfasst:
- eine Empfangsvorrichtung (35) zum Empfang von Signalen einer Funkverbindung von der mindestens einen zweiten Funkstation (2) über mindestens einen zweiten Funkkanal (90) in Form eines Zeitschlitzes,
- eine Sendevorrichtung (40) zur Versendung von Signalen im Rahmen der Funkverbindung an die mindestens eine zweite Funkstation (2) über den mindestens einen ersten Funkkanal (85) in Form eines Zeitschlitzes und
- eine Auswerteeinheit (45) zur Auswertung von über die Empfangsvorrichtung (35) von der mindestens einen zweiten Funkstation (2) empfangenen Befehlen und zur Einstellung der Sendeleistung der Sendevorrichtung (40) in Abhängigkeit der Auswertung dieser Befehle,
**dadurch gekennzeichnet, dass** in dem Fall, in dem die Empfangsvorrichtung (10) der mindestens einen zweiten Funkstation (2) in einem oder in mehreren aufeinanderfolgenden Zeitschlitzen keine Informationen für die mindestens eine zweite Funkstation (2) empfängt, die Mittel (25, 30) vorgesehen sind, die Qualität der Funkverbindung aus in mindestens einem nicht der Funkverbindung zugeordneten anderen Funkkanal übertragenen und von der Empfangsvorrichtung (10) empfangenen Signalen abzuleiten,
**dass** die Auswerteeinheit (45) in der ersten Funkstation (1) eingerichtet ist, den Empfang der besagten Befehle über die Empfangsvorrichtung (35) auch in Zeiten ausgesetzter Aktivität des mindestens einen ersten Funkkanals (85) der Funkverbindung zu prüfen, **und dass** die Auswerteeinheit (45) eingerichtet ist, zwischen zwei aufeinanderfolgenden Sendezeitpunkten für das Senden von Informationen an die mindestens eine zweite Funkstation (2) über den mindestens einen ersten Funkkanal (85) aus den in dieser Zeit empfangenen Befehlen die von der mindestens einen zweiten Funkstation (2) vorgegebenen Änderungen der Sendeleistung für die Einstellung der Sendeleistung an der Sendevorrichtung (40) zu addieren.

12. Mobilfunksystem nach Anspruch 11, **dadurch gekennzeichnet, dass** die Auswertevorrichtung (15) in der mindestens einen zweiten Funkstation (2) einen wahlfreien Zugriffskanal (5) erzeugt, auf dem die Sendevorrichtung (20) die erzeugten Befehle an die erste Funkstation (1) absendet.

13. Mobilfunksystem nach Ansprüchen 11 oder 12, **dadurch gekennzeichnet, dass** die Mittel (25, 30) zur Bestimmung der Qualität der Funkverbindung in der mindestens einen zweiten Funkstation (2) eine Vorrichtung (25) zur Ermittlung eines Signal/Interferenzverhältnisses umfassen, die für den Fall, in dem die Qualität der Funkverbindung in Zeitschlitzen ermittelt wird, die für die Übertragung von Informationen von der ersten Funkstation (1) zu beliebigen Funkstationen vorgegeben sind, die Qualität der Funkverbindung anhand des Signal/Interferenzverhältnisses der in den entsprechenden Zeitschlitzen (11, 12, 14) durch die Empfangsvorrichtung (10) empfangenen Signale bestimmt.

14. Mobilfunksystem nach Ansprüchen 11, 12 oder 13, **dadurch gekennzeichnet, dass** die Mittel (25, 30) zur Bestimmung der Qualität der Funkverbindung in der mindestens einen zweiten Funkstation (2) eine Vorrichtung (30) zur Ermittlung einer Dämpfung umfassen, die die Qualität der Funkverbindung durch Ermittlung der Empfangsleistung von über einen gemeinsamen physikalischen Steuerkanal übertragenen systemspezifischen Informationen und Vergleich der ermittelten Empfangsleistung mit der für die Übertragung dieser Informationen in der ersten Funkstation (1) vorgegebenen Sendeleistung schätzt.

15. Mobilfunksystem nach Anspruch 11, **dadurch gekennzeichnet, dass** die Empfangsvorrichtung (35) in der ersten Funkstation (1) eingerichtet ist, einen wahlfreien Zugriffskanal (5) nach solchen Befehlen abzutasten.

## Claims

1. Method for regulation of the transmission power of a first radio station (1) in a mobile radio system using a timeslot method, with a radio link existing between the first radio station (1) and at least one second radio station (2), in which radio signals are interchanged in the form of timeslots on radio channels (11, 12, 14), and with the quality of the radio link being determined from the received signals in the second radio station (2), and with commands to adjust the transmission power being sent from the second radio station (2) to the first radio station (1) as a function of the determined quality, **characterized in that,** in a situation in which no information for the second radio station (2) is transmitted in one or more successive timeslots, the quality of the radio link is derived from signals which have been transmitted in at least one other radio channel, which is not associated with that radio link, and have been received by the second radio station (2), and **in that** the arrival of multiple commands to adjust the transmission power with predetermined power changes in the first radio station (1) results in these predetermined power changes being overlaid in the first radio station (1) by means of summing between two transmission times for the transmission of data to the second radio station (2), so that the transmission power of the first radio station (1) can be adjusted at the subsequent transmission time.

2. Method according to Claim 1, **characterized in that**, in a situation in which the quality of the radio link is determined in timeslots (11, 12, 14) which are predetermined for the transmission of information for the second radio station (2) or for at least one further radio station, the quality of the radio link is determined on the basis of the signal-to-interference ratio of the signals received in the corresponding timeslots (11, 12, 14) in the second radio station (2).

3. Method according to Claim 1 or 2, **characterized in that** the quality of the radio link is estimated in the second radio station (2) by determination of the received power of system-specific information which is transmitted via a common physical control channel, and comparison with the transmission power predetermined for the transmission of this information in the first radio station (1).

4. Method according to Claim 1, 2 or 3, **characterized in that** at least some of the commands for adjustment of the transmission power are transmitted via a random access channel (5) to the first radio station (1).

5. Method according to one of the preceding claims, **characterized in that**, in the situation in which it is found in the second radio station (2) that the determined quality of the radio link exceeds a predetermined value, a command to reduce the transmission power is produced, and is sent to the first radio station (1).

6. Method according to one of the preceding claims, **characterized in that**, in the situation in which it is found in the second radio station (2) that the determined quality of the radio link has fallen below a predetermined value, a command to increase the transmission power is produced, and is sent to the first radio station (1).

7. Method according to one of the preceding claims, **characterized in that** the second radio station (2) produces a command to adjust the transmission power only if the determined quality of the radio link is outside a predetermined range.

8. Method according to one of the preceding claims, **characterized in that** the commands to adjust the transmission power are transmitted in the course of the radio link between the first radio station (1) and the second radio station (2).

9. Method according to one of the preceding claims, **characterized in that** signals from different radio links in the mobile radio system are transmitted using a code-division multiple access method, in particular using mutually orthogonal codes.

10. Method according to one of the preceding claims, **characterized in that** the quality of the radio link is determined in the second radio station (2) more frequently the quicker the characteristics of the associated radio channel are changing.

11. Mobile radio system having a first radio station (1) and at least one second radio station (2),
**wherein** the at least one second radio station (2) comprises:
- a receiving apparatus (10) for reception of signals of a radio link from the first radio station (1) via at least one first radio channel (85) in the form of a timeslot,
- means (25, 30) for determination of the quality of the radio link from the received signals,
- an evaluation apparatus (15) for production of commands for adjustment of the transmission power of the first radio station (1) as a function of the determined quality of the radio link, and
- a transmission apparatus (20) for sending the commands to the first radio station (1),
**and wherein** the first radio station (1) comprises:
- a receiving apparatus (35) for reception of signals of a radio link from the at least one second radio station (2) via at least one second radio channel (90) in the form of a timeslot,
- a transmission apparatus (40) for transmission of signals in the course of the radio link to the at least one second radio station (2) via the at least one first radio channel (85) in the form of a timeslot, and
- an evaluation unit (45) for evaluation of commands, which have been received from the at least one second radio station (2) via the receiving apparatus (35), and for adjustment of the transmission power of the transmission apparatus (40) as a function of the evaluation of these commands,
**characterized in that** in the situation in which the receiving apparatus (10) of the at least one second radio station (2) receives no information for the at least one second radio station (2) in one or more successive time slots, the means (25, 30) are intended to derive the quality of the radio link from signals which have been transmitted from at least one other radio channel, which is not associated with that radio link, and have been received by the receiving apparatus (10),
**in that** the evaluation unit (45) in the first radio station (1) is designed to check reception of said commands by means of the receiving apparatus (35) even in times of suspended activity of the at least one first radio channel (85) of the radio link, and **in that** the evaluation unit (45) is designed so as, between two successive transmission times for the transmission of information to the at least one second radio station (2) via the at least one first radio channel (85), to add, from the commands received in this time, the changes predetermined by the at least one second radio station (2) for the transmission power, for adjustment of the transmission power at the transmission apparatus (40).

12. Mobile radio system according to Claim 11, **characterized in that** the evaluation apparatus (15) in the at least one second radio station (2) produces a random access channel (5) on which the transmission apparatus (20) sends the commands that have been produced to the first radio station (1).

13. Mobile radio system according to Claim 11 or 12, **characterized in that** the means (25, 30) for determination of the quality of a radio link in the at least one second radio station (2) comprise an apparatus (25) for determination of the signal-to-interference ratio which, in the situation in which the quality of the radio link is determined in timeslots which are predetermined for the transmission of information from the first radio station (1) to non-specific radio stations, determines the quality of the radio link on the basis of the signal-to-interference ratio of the signals received by the receiving apparatus (10) in the corresponding timeslots (11, 12, 14).

14. Mobile radio system according to Claim 11, 12 or 13, **characterized in that** the means (25, 30) for determination of the quality of the radio link in the at least one second radio station (2) comprise an apparatus (30) for determination of an attenuation, which estimates the quality of the radio link by determination of the received power of system-specific information transmitted via a common physical control channel, and comparison of the determined received power with the transmission power predetermined in the first radio station (1) for the transmission of this information.

15. Mobile radio system according to Claim 11, **characterized in that** the receiving apparatus (35) in the first radio station (1) is designed to scan a random access channel (5) for such commands.

## Revendications

1. Procédé de régulation de la puissance d'émission d'une première station radio (1) dans un système mobile de radiocommunications comprenant un procédé de créneau temporel, avec une liaison radio entre la première station radio (1) et au moins une deuxième station radio (2) qui permet d'échanger des signaux radio dans des canaux radio (11, 12, 14) sous la forme de créneaux temporels, alors que dans la deuxième station radio (2), on détermine une qualité de la liaison radio à partir des signaux reçus et qu'en fonction de la qualité déterminée, la deuxième station radio (2) envoie des ordres destinés à régler la puissance d'émission à la première station radio (1),
**caractérisé en ce que**
dans le cas où aucune information pour la deuxième station radio (2) n'est transmise dans un ou plusieurs créneaux temporels successifs, la qualité de la liaison radio est dérivée de signaux transmis dans au moins un autre canal radio non associé à la liaison radio et reçus par la deuxième station radio (2),
et en ce dans le cas de l'arrivée de plusieurs ordres destinés à régler la puissance d'émission avec des variations de puissance prédéfinies dans la première station radio (1) entre deux instants d'émission pour le transfert de données à la deuxième station radio (2), ces variations de puissance prédéfinies dans la première station radio (1) sont superposées par addition, de telle sorte qu'à l'instant d'émission suivant, la puissance d'émission de la première station radio (1) puisse être réglée.

2. Procédé selon la revendication 1,
**caractérisé en ce que**
dans le cas où la qualité de la liaison radio est déterminée en créneaux temporels (11, 12, 14) prédéterminés pour transmettre des informations pour la deuxième station radio (2) ou pour au moins une autre station radio, on définit la qualité de la liaison radio à l'aide d'un rapport signal/interférence des signaux reçus dans les créneaux temporels (11, 12, 14) correspondants dans la deuxième station radio (2).

3. Procédé selon la revendication 1 ou 2,
**caractérisé en ce que**
la qualité de la liaison radio dans la deuxième station radio (2) est évaluée en déterminant la puissance de réception d'informations spécifiques au système transmises par un canal de commande physique commun et en la comparant à la puissance d'émission prédéterminée pour la transmission de ces informations dans la première station radio (1).

4. Procédé selon la revendication 1, 2 ou 3,
**caractérisé en ce qu'**
au moins une partie des ordres de réglage de la puissance d'émission est transmise à la première station radio (1) par un canal d'accès (5) facultatif.

5. Procédé selon l'une des revendications précédentes,
**caractérisé en ce que**
dans le cas où on a déterminé dans la deuxième station radio (2) que la qualité déterminée de la liaison radio est supérieure à une valeur prédéterminée, on génère un ordre de réduction de la puissance d'émission qui est envoyé à la première station radio (1).

6. Procédé selon l'une des revendications précédentes,
**caractérisé en ce que**
dans le cas où on a déterminé dans la deuxième station radio (2) que la qualité déterminée de la liaison radio est inférieure à une valeur prédéterminée, on génère un ordre d'augmentation de la puissance d'émission qui est envoyé à la première station radio (1).

7. Procédé selon l'une des revendications précédentes,
**caractérisé en ce que**
la deuxième station radio (2) génère un ordre de réglage de la puissance d'émission seulement lorsque la qualité déterminée de la liaison radio se trouve en dehors d'une plage prédéterminée.

8. Procédé selon l'une des revendications précédentes,
**caractérisé en ce que**
les ordres de réglage de la puissance d'émission sont transmis dans le cadre de la liaison radio entre la première station radio (1) et la deuxième station radio (2).

9. Procédé selon l'une des revendications précédentes,
**caractérisé en ce qu'**
on transmet des signaux de différentes liaisons radio du système mobile de radiocommunications à l'aide d'une procédure d'accès à codes multiples, en particulier en utilisant des codes orthogonaux entre eux.

10. Procédé selon l'une des revendications précédentes, **caractérisé en ce que** la qualité de la liaison radio est déterminée d'autant plus souvent dans la deuxième station radio (2) que les propriétés du canal radio correspondant changent rapidement.

11. Système mobile de radiocommunication comprenant une première station radio (1) et au moins une deuxième station radio (2),
l'au moins une station radio (2) comprenant :
- un dispositif de réception (10) destiné à recevoir des signaux d'une liaison radio de la première station radio (1) par au moins un premier canal radio (85) sous la forme d'un créneau temporel,
- des moyens (25, 30) pour définir la qualité de la liaison radio à partir des signaux reçus,
- un dispositif d'analyse (15) pour générer des ordres pour le réglage de la puissance d'émission de la première station radio (1) en fonction de la qualité déterminée de la liaison radio, et
- un dispositif d'émission (20) pour envoyer les ordres à la première station radio (1),
- et la première station radio (1) comprenant :
- un dispositif de réception (35) pour recevoir des signaux d'une liaison radio de l'au moins une deuxième station radio (2) par l'au moins un deuxième canal radio (90) sous la forme d'un créneau temporel,
- un dispositif d'émission (40) pour envoyer des signaux dans le cadre de la liaison radio à l'au moins une deuxième station radio (2) par au moins un premier canal radio (85) sous la forme d'un créneau temporel et
- une unité d'analyse (45) pour analyser des ordres reçus par le biais du dispositif de réception (35) par l'au moins une deuxième station radio (2) et pour régler la puissance d'émission du dispositif d'émission (40) en fonction de l'analyse de ces ordres,
**caractérisé en ce que** dans le cas où le dispositif de réception (10) de l'au moins une deuxième station radio (2) dans un ou plusieurs créneaux temporels successifs ne reçoit aucune information pour l'au moins une deuxième station radio (2), les moyens (25, 30) sont prévus pour déduire la qualité de la liaison radio à partir de signaux transmis dans au moins un autre canal radio non associé à la liaison radio et reçus par le dispositif de réception (10),
**en ce que** l'unité d'analyse (45) est prévue, dans la première station radio (1), pour vérifier la réception desdits ordres par le biais du dispositif de réception (35) également à des moments d'activité suspendue de l'au moins un premier canal radio (85) de la liaison radio, et
**en ce que** l'unité d'analyse (45) est prévue, entre deux instants d'émission successifs pour l'envoi d'informations à l'au moins une deuxième station radio (2) par le biais de l'au moins un premier canal radio (85), à partir des ordres reçus, pour additionner les variations de la puissance d'émission prédéfinies par l'au moins une deuxième station radio (2) pour le réglage de la puissance d'émission au niveau du dispositif d'émission (40).

12. Système mobile de radiocommunication selon la revendication 11,
**caractérisé en ce que**
le dispositif d'analyse (15) dans l'au moins une deuxième station radio (2) génère un canal d'accès facultatif (5) sur lequel le dispositif d'émission (20) envoie les ordres générés à l'autre station radio (1).

13. Système mobile de radiocommunication selon la revendication 11 ou 12,
**caractérisé en ce que**
les moyens (25, 30) pour définir la qualité de la liaison radio dans l'au moins une deuxième station radio (2) comprennent un dispositif (25) déterminant un rapport signal/interférence qui, dans le cas où la qualité de la liaison radio est déterminée en créneaux temporels prédéterminés pour transmettre des informations par la première station radio (1) à des stations radio appropriées, définit la qualité de la liaison radio à l'aide du rapport signal/interférence des signaux reçus dans les créneaux temporels (11, 12, 14) correspondants par le dispositif de réception (10).

14. Système mobile de radiocommunication selon la revendication 11, 12 ou 13,
**caractérisé en ce que**
les moyens (25, 30) pour définir la qualité de la liaison radio dans l'au moins une deuxième station radio (2) comprennent un dispositif (30) déterminant une atténuation, qui évalue la qualité de la liaison radio en déterminant la puissance de réception d'informations spécifiques au système transmises par un canal de commande physique commun et en comparant la puissance de réception déterminée à la puissance d'émission prédéterminée pour la transmission de ces informations dans la première station radio (1).

15. Système mobile de radio communication selon la revendication 11, **caractérisé en ce que** le dispositif de réception (35) dans la première station radio (1) est prévu pour balayer un canal d'accès facultatif (5) en fonction de tels ordres.
